# EUROPÄISCHE PATENTSCHRIFT

(11) **EP 1 710 598 B1**
(45) Veröffentlichungstag und Bekanntmachung des Hinweises auf die Patenterteilung: **03.12.2008**
(21) Anmeldenummer: 05007647.0
(22) Anmeldetag: 07.04.2005
(51) Int. Cl.: B60R 21/01

(54) **Vorrichtung zur Detektion einer Kollision eines Kraftfahrzeugs mit einer Person**
Apparatus for collision detection of a vehicle with a pedestrian
Appareil de détection de la collision d'un véhicule avec un piéton

(43) Veröffentlichungstag der Anmeldung: 11.10.2006
(73) Patentinhaber: Delphi Technologies, Inc., Troy, MI 48007 (US)
(72) Erfinder: Sollich, Norbert J., 44805 Bochum (DE); Ghosh, Lali, 55128 Mainz (DE); Lutter, Gerhard, 16562 Bergfelde (DE); Maly, Wilfried, 42349 Wuppertal (DE); Egbert, Peter, 51766 Engelskirchen (DE)
(74) Vertreter: Denton, Michael John

(56) Entgegenhaltungen:
- WO-A-02/098715
- WO-A-03/062780
- WO-A-20/04078531
- DE-A- 4 445 996
- DE-A1- 3 817 627
- DE-A1- 10 230 560
- DE-A1- 10 257 125
- DE-A1-4102004 015 47
- GB-A- 2 396 942
- GB-A- 2 400 352
- US-A- 5 164 901
- US-A- 5 767 766
- US-B1- 6 329 910

## Beschreibung

Die Erfindung betrifft eine Vorrichtung zur Detektion einer Kollision eines Kraftfahrzeugs mit einer Person, wobei die Vorrichtung einen Kontaktsensor und wenigstens einen Beschleunigungssensor umfasst und wobei der Kontaktsensor und der Beschleunigungssensor im Bereich eines Stoßfängers des Kraftfahrzeugs angeordnet sind.

Bei einer bekannten Vorrichtung der eingangs genannten Art wird ein von dem Kontaktsensor geliefertes Signal mit vorgegebenen Schwellwerten verglichen. Überschreitet das Kontaktsensorsignal einen vorbestimmten unteren Schwellwert, ohne dabei einen vorbestimmten oberen Schwellwert zu überschreiten, so wird angenommen, dass eine Kollision des Kraftfahrzeugs mit einer Person stattgefunden hat. In diesem Fall können geeignete Maßnahmen zum Schutz der Person ergriffen werden, wie z.B. die Aktivierung eines Airbags oder das Hochklappen der Motorhaube. Liegt das Kontaktsensorsignal hingegen außerhalb eines auf eine Personenkollision hindeutenden Wertebereiches, so wird angenommen, dass eine Kollision des Kraftfahrzeugs mit einem nicht lebenden Objekt, wie z.B. einem Laternenpfahl, einem Straßenschild oder einer Mauer, stattgefunden hat. Personenschutzmaßnähmen werden in diesem Fall nicht ausgelöst.

Durch die zusätzliche Berücksichtigung eines Signals des Beschleunigungssensors wird die Zuverlässigkeit der Detektion einer Kollision des Fahrzeugs mit einem Menschen erhöht, d.h. eine Kollision wird nur dann als Kollision zwischen Fahrzeug und Mensch erkannt, wenn zusätzlich zu dem Kontaktsensorsignal auch das Beschleunigungssensorsignal in einem vorbestimmten Wertebereich liegt.

Aus der US-B-6,329,910 ist eine Kraftfahrzeug-Kollisionsdetektionsvorrichtung bekannt, die ausschließlich magnetotstriktive Sensoren aufweist. Die WO-A-02/098715 offenbart eine Kraftfahrzeug-Kollisionsdetektionsvorrichtung, die ausschließlich Beschleunigungssensoren umfasst. In der DE-A-102 30 560 ist eine Kraftfahrzeug-Kollisionsdetektionsvorrichtung beschrieben, die zwei Zugsensoren und/oder zwei Sensorelemente umfasst, die jeweils eine Vielzahl von parallel oder in Serie geschalteten elektrischen Bauteilen aufweisen.

Eine Vorrichtung gemäß dem Oberbegriff des Anspruchs 1 ist aus der GB-A-2 396 942 bekannt.

Der Erfindung liegt die Aufgabe zugrunde, eine Vorrichtung zur Detektion einer Kollision eines Kraftfahrzeugs mit einer Person zu schaffen, welche die Sicherheit der Person im Fall einer Kollision erhöht.

Die Aufgabe wird erfindungsgemäß durch eine Vorrichtung mit den Merkmalen des Anspruchs 1 und insbesondere dadurch gelöst, dass eine mit den Sensoren verbundene Auswerteeinheit vorgesehen ist, durch welche eine Spektralanalyse eines von dem Beschleunigungssensor ausgegebenen Signals durchführbar ist, um ein Auto-Power-Spektrum des Signals zu erzeugen.

Die erfindungsgemäße Vorrichtung ermöglicht die Detektion einer Kollision eines Kraftfahrzeugs mit einem Menschen anhand des Auto-Power-Spektrums eines von einem Beschleunigungssensor ausgegebenen Signals. Die Analyse des Auto-Power-Spektrums erlaubt im Gegensatz zu einer reinen Schwellwertbetrachtung eine wesentlich detailliertere Auswertung des bei einer Kollision ausgegebenen Sensorsignals. Dadurch ist die Zuverlässigkeit des Detektionsergebnisses erheblich erhöht, d.h. es lässt sich mit einer erhöhten Sicherheit feststellen, ob tatsächlich eine Kollision mit einem Menschen stattgefunden hat oder nicht. Im Ergebnis führt dies zu einem verbesserten Schutz eines Fußgängers im Falle einer Kollision mit dem Kraftfahrzeug.

Die Ermittlung der Art der Kollision erfolgt erfindungsgemäß primär durch die Auswertung eines von dem Beschleunigungssensor ausgegebenen Signals. Da Beschleunigungssensoren im Vergleich zu beispielsweise Kontaktsensoren oder Drucksensoren eine höhere Empfindlichkeit aufweisen und insbesondere höhere Frequenzen detektieren können, weist das von einem Beschleunigungssensor ausgegebene Signal einen höheren Informationsgehalt auf als beispielsweise ein von einem Kontaktsensor oder Drucksensor ausgegebenes Signal.

Durch die erfindungsgemäße Durchführung einer Spektralanalyse des Beschleunigungssensorsignals und die Auswertung des daraus ermittelten Auto-Power-Spektrums lässt sich die in dem Beschleunigungssensorsignal enthaltene Information, d.h. die Stärke und Amplitude der einzelnen Frequenzanteile, genau auflösen und zur Beurteilung der Art der Kollision heranziehen. Die erhöhte Informationsdichte des Beschleunigungssensorsignals führt dabei zu einem verbesserten Detektionsergebnis und trägt dazu bei, den Schutz einer Person im Falle einer Kollision mit einem Kraftfahrzeug noch weiter zu verbessern.

Zusätzlich ist das durch den Beschleunigungssensor ermittelte Detektionsergebnis durch eine Auswertung des Kontaktsensorsignals verifizierbar.

Die Kollisionsdetektion beruht also auf zwei unterschiedlichen physikalischen Messprinzipien, nämlich zum einen auf einer Kontaktmessung und zum anderen auf der Messung einer Beschleunigung bzw. Verzögerung des Kraftfahrzeugs. Beide Messmethoden ermöglichen jeweils für sich genommen die Erkennung einer Kollision eines Kraftfahrzeugs mit einer Person. Die erfindungsgemäße Vorrichtung ist also auch dann noch funktionsfähig, falls einer der beiden Sensoren versagen sollte.

Dadurch ist die Störanfälligkeit der erfindungsgemäßen Vorrichtung erheblich verringert und die Sicherheit, mit der ein Mensch im Falle einer Kollision korrekt als solcher erkannt wird, erheblich erhöht. Ein von einem Kraftfahrzeug erfasster Fußgänger kann somit insgesamt besser geschützt werden.

Vorteilhafte Ausbildungen der Erfindung sind den Unteransprüchen, der Beschreibung und der Zeichnung zu entnehmen.

Gemäß einer bevorzugten Ausführungsform sind mindestens zwei Beschleunigungssensoren vorgesehen. Werden die von den Beschleunigungssensoren ausgegebenen Signale unabhängig voneinander ausgewertet, so lassen sich die Ergebnisse der Auswertung gegenseitig überprüfen. Dadurch kann eine Personenkollision noch zuverlässiger detektiert werden und die Sicherheit der Person noch weiter erhöht bzw. eine unnötige Auslösung von Sicherheitsmaßnahmen noch besser vermieden werden.

Werden die von den beiden Beschleunigungssensoren ausgegebenen Signale hingegen abhängig voneinander betrachtet, so lässt sich bei einer entsprechenden Auswertung der Bereich des Stoßfängers ermitteln, in dem die Kollision erfolgt, mit anderen Worten also eine ortsaufgelöste Detektion erreichen. Dies ermöglicht eine gezieltere Vornahme von Schutzmaßnahmen.

Grundsätzlich ist es möglich, mehr als zwei Beschleunigungssensoren vorzusehen. Dies führt jedoch zu einer Erhöhung der Herstellungskosten der Vorrichtung und zu einer Erhöhung der auszuwertenden Daten, ohne dabei einen wesentlichen Informationsgewinn mit sich zu bringen.

Vorteilhafterweise ist durch die Auswerteeinheit das Kreuzleistungsspektrum der von zwei Beschleunigungssensoren ausgegebenen Signale bestimmbar. Das Kreuzleistungsspektrum ist ein Maß für die Übereinstimmung der von den Beschleunigungssensoren ausgegebenen Signale und somit letztlich ein Maß für die Zuverlässigkeit der Signale.

Durch die Auswerteeinheit kann ferner eine Phasenverschiebung des Kreuzleistungsspektrums der von den beiden Beschleunigungssensoren ausgegebenen Signale bestimmbar sein. Die Phasenverschiebung ist ein direktes Maß für den Ort, an welchem ein Hindernis auf den Stoßfänger trifft. Durch die Ermittlung der Phasenverschiebung lässt sich also genau feststellen, in welchem Bereich des Stoßfängers die Kollision stattgefunden hat. Im Fall einer Personenkollision lassen sich folglich entsprechend angepasste Sicherheitsmaßnahmen auslösen.

Gemäß einer weiteren vorteilhaften Ausführungsform sind die von zwei Beschleunigungssensoren ausgegebenen Signale unabhängig voneinander durch die Auswerteeinheit auswertbar. Das Signal jedes Beschleunigungssensors wird also jeweils dahingehend für sich ausgewertet, ob überhaupt eine Kollision stattgefunden hat und wenn ja, welcher Art die Kollision zuzuordnen ist. Eine Auslösung von Personenschutzmaßnahmen erfolgt nur dann, wenn die Auswertung der beiden Beschleunigungssensorsignale unabhängig voneinander das Ergebnis liefert, dass eine Personenkollision vorliegt. Dies trägt zur Erhöhung der Zuverlässigkeit des Detektionsergebnisses und zur Vermeidung einer unnötigen Auslösung von Sicherheitsmaßnahmen bei.

Gemäß einer weiteren bevorzugten Ausführungsform ist der oder jeder Beschleunigungssensor aktivierbar, wenn ein von dem Kontaktsensor ausgegebenes Signal einen vorbestimmten Schwellwert überschreitet. Der Beschleunigungssensor bzw. die Beschleunigungssensoren befinden sich im Nicht-Kollisionsfall, d.h. bei einem normalen Gebrauch des Kraftfahrzeugs, in einem Ruhezustand und gibt bzw. geben keine Signale aus. Erst im Falle einer Kollision wird der Beschleunigungssensor bzw. werden die Beschleunigungssensoren durch ein entsprechendes Signal des Kontaktsensors aktiviert.

Im Ergebnis wird auf diese Weise die Menge der zu verarbeitenden Daten reduziert. Die dadurch freigegebene Rechenkapazität der Auswerteeinheit lässt sich im Nicht-Kollisionsfall folglich für Rechenoperationen nutzen, die von der Kollisionserkennung unabhängig sind. Dies kann sich insbesondere dann als vorteilhaft erweisen, wenn die Auswerteeinheit in eine zentrale Rechnereinheit des Kraftfahrzeugs integriert ist.

Bevorzugt sind zwei Beschleunigungssensoren quer zur Fahrtrichtung gesehen zueinander beabstandet. Bei einer Auswertung der Phasenverschiebung des Kreuzleistungsspektrums der von den beiden Beschleunigungssensoren ausgegebenen Signale ermöglicht dies eine örtliche Auflösung der Kollisionsdetektion, d.h. die Bestimmung des Bereichs des Stoßfängers, in dem die Kollision stattgefunden hat. Im Falle einer Personenkollision lassen sich Sicherheitsmaßnahmen zum Schutz der Person gezielter einsetzen und die Sicherheit der Person somit noch weiter erhöhen.

Der Kontaktsensor kann mehrere über die Breite des Stoßfängers verteilt angeordnete Sensorabschnitte umfassen. Dadurch ermöglicht auch der Kontaktsensor eine ortsaufgelöste Detektion einer Kollision. Dies ist dann besonders vorteilhaft, wenn die Vorrichtung lediglich einen Beschleunigungssensor umfasst oder zwei Beschleunigungssensoren unabhängig voneinander ausgewertet werden. Wird die Ortsauflösung bereits durch die Auswertung der Phasenverschiebung des Kreuzleistungsspektrums zweier Beschleunigungssensorsignale erreicht, so kann die Ortsbestimmung durch die Sensorabschnitte des Kontaktsensors zusätzlich zur Verifikation herangezogen werden.

Vorteilhafterweise weist der Kontaktsensor eine Folie auf, deren elektrischer Widerstand sich beim Verbiegen der Folie reversibel ändert. Dadurch dass sich der Widerstand reversibel ändert, muss der Kontaktsensor nach einer Kollision nicht ausgetauscht werden, sondern es reicht aus, die Folie wieder in ihre ursprüngliche Form zu bringen, z.B. glatt zu streichen.

Die Kontaktsensorfolie reagiert ausschließlich auf Verbiegen und ist unempfindlich gegenüber Zug- oder Druckkräften, anderen mechanischen Einflüssen oder Temperatureinflüssen.

Im Normalzustand, d.h. im gewissermaßen geraden, nicht verbogenen Zustand, weist die Kontaktsensorfolie einen elektrischen Widerstand von typischerweise wenigen KOhm auf. Aufgrund dieses vergleichsweise geringen Widerstandes ist die Kontaktsensorfolie unempfindlich gegenüber elektromagnetischen Störungen. Wird die Folie bei einer Kollision verbogen, so erhöht sich der elektrische Widerstand in Abhängigkeit von dem Biegeradius. Dabei kann der elektrische Widerstand Werte im Bereich von über 100 KOhm erreichen.

Die Folie kann ein elektrisch leitfähiges Material mit vorgegebenen Mikrorissen aufweisen, die beim Verbiegen der Folie aufgeweitet werden. Dies führt dazu, dass der elektrische Widerstand der Folie bei einem Verbiegen kontinuierlich ansteigt. Durch das Öffnen aller Mikrorisse kann der elektrische Widerstand sogar unendlich groß werden und ein Stromkreis vollständig unterbrochen werden.

Das Öffnen der Mikrorisse ist reversibel. Sobald der verbogene Zustand der Folie rückgängig gemacht wird, schließen sich die Mikrorisse und der elektrische Widerstand der Folie nimmt wieder seinen ursprünglichen Ausgangswert an.

Durch den Verlauf und die Größe der Änderung des elektrischen Widerstandes der Kontaktsensorfolie lässt sich unmittelbar auf die Art und die Stärke der Verbiegung der Folie zurückschließen. Dies wiederum ermöglicht eine Aussage über die Art einer Kollision und insbesondere darüber, ob eine Kollision mit einem Menschen stattgefunden hat.

Gegenstand der Erfindung sind auch die sich aus den voranstehenden Erläuterungen ergebenden, zur Auswertung der von den Sensoren ausgegebenen Signale erforderlichen Verfahrensschritte.

Nachfolgend wird die Erfindung rein beispielhaft anhand vorteilhafter Ausführungsformen unter Bezugnahme auf die Zeichnung beschrieben.
Es zeigen:
- Fig. 1: eine schematische Darstellung einer ersten Ausführungsform der erfindungsgemäßen Vorrichtung;
- Fig. 2A, B: für die Vorrichtung von Fig. 1 errechnete Simulationsergebnisse einer Kollision eines sich mit 7 km/h bewegenden Kraftfahrzeugs mit einem Gegenstand aus Holz;
- Fig. 3A, B: für die Vorrichtung von Fig. 1 errechnete Simulationsergebnisse einer Kollision eines sich mit 7 km/h bewegenden Kraftfahrzeugs mit einem Bein einer Kuh; und
- Fig. 4: eine schematische Darstellung einer zweiten Ausführungsform der erfindungsgemäßen Vorrichtung.

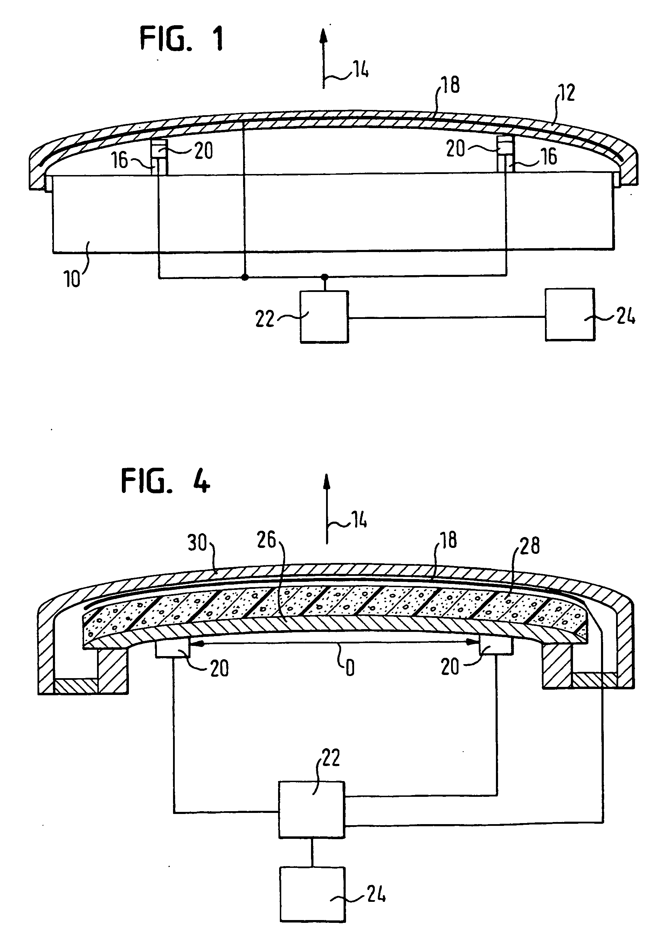

Fig. 1 zeigt den vorderen Bereich eines Kraftfahrzeugs mit einem Chassis 10, an dem ein Stoßfänger 12 angebracht ist. Zur Befestigung des Stoßfängers 12 an dem Chassis 10 dienen zwei sich in Fahrtrichtung 14 erstreckende Trägerelemente 16, die quer zur Fahrtrichtung 14 gesehen zueinander beabstandet sind.

In dem Stoßfänger 12 ist ein Kontaktsensor 18 angeordnet, bei dem es sich um eine Mikrorisse aufweisende elektrisch leitfähige Folie handeln kann, die in Verbindung mit Fig. 4 näher erläutert wird. Wie Fig. 1 zeigt, erstreckt sich der Sensor 18 im Wesentlichen über die gesamte Breite des Stoßfängers 12.

An jedem Trägerelement 16 ist ein Beschleunigungssensor 20 angeordnet. Im Normalzustand, d.h. im Nicht-Kollisionsfall, befinden sich die Beschleunigungssensoren 20 in einem Ruhezustand, d.h. sie sind inaktiv und geben keine Signale aus.

Die Beschleunigungssensoren 20 und der Kontaktsensor 18 sind mit einer Auswerteeinheit 22 verbunden, durch die von den Beschleunigungssensoren 20 und dem Kontaktsensor 18 ausgegebene Signale auswertbar sind.

Die Auswerteeinheit 22 ist ihrerseits mit einer zentralen Rechnereinheit 24 des Kraftfahrzeugs verbunden, durch die bei Detektion einer Kollision des Kraftfahrzeugs mit einer Person geeignete Sicherheitsmaßnahmen zum Schutz der Person auslösbar sind. Anstatt, wie in Fig. 1 gezeigt ist, eine separate Einheit zu bilden, kann die Auswerteeinheit 22 auch in die zentrale Rechnereinheit 24 integriert sein.

Bei einer Kollision des Kraftfahrzeugs mit einem Hindernis, z.B. einem Straßenschild oder Menschen, gerät der Stoßfänger 12 mit dem Hindernis in Kontakt und wird durch diesen eingedrückt. Dadurch wird der in dem Stoßfänger 12 angeordnete Kontaktsensor 18 verformt.

Die Verformung des Kontaktsensors 18 führt zu einer Änderung einer charakteristischen, beispielsweise elektrischen, Eigenschaft des Kontaktsensors 18, welche als entsprechendes Signal an die Auswerteeinheit 22 ausgegeben wird.

Überschreitet das Kontaktsensorsignal einen vorbestimmten fahrzeuggeschwindigkeitsabhängigen Schwellwert, so werden die Beschleunigungssensoren 20 aktiviert. Der Schwellwert ist für jede Fahrzeuggeschwindigkeit so gewählt, dass eine irrtümliche Aktivierung der Beschleunigungssensoren 20 aufgrund eines Rauschens des Kontaktsensors 18 oder aufgrund von unebenen Straßenverhältnissen vermieden wird.

Die aktivierten Beschleunigungssensoren 20 messen die Intensität der Kollision über einen vorbestimmten Zeitraum von beispielsweise 10 ms. Die Messergebnisse der Beschleunigungssensoren 20 werden als entsprechende Signale an die Auswerteeinheit 22 ausgegeben.

In der Auswerteeinheit 22 werden die Beschleunigungssensorsignale ausgewertet, indem eine Bewertung der Frequenzspektren der Signale durchgeführt wird. Aus der so gewonnenen Information lassen sich die Auto-Power-Spektren der Signale ableiten, welche im Falle unterschiedlicher Arten von Kollisionen unterschiedliche Charakteristiken aufweisen.

Durch die Analyse der Auto-Power-Spektren der Beschleunigungssensorsignale lässt sich mit anderen Worten auf die Art der Kollision zurückschließen und somit bestimmen, ob eine Kollision mit beispielsweise einem harten oder weichen Gegenstand oder mit einem Menschen stattgefunden hat. Die ermittelten Auto-Power-Spektren der Beschleunigungssensorsignale werden zu diesem Zweck mit fahrzeuggeschwindigkeitsabhängigen charakteristischen Spektren verglichen, die in einem Register der Auswerteeinheit 22 abgelegt sind.

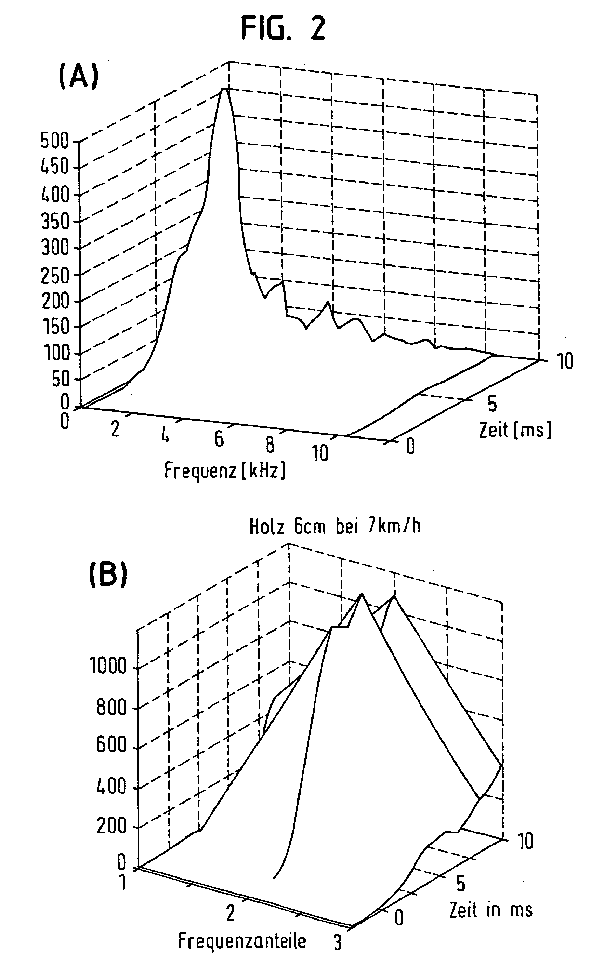

Fig. 2 zeigt das Auto-Power-Spektrum eines Beschleunigungssensorsignals, welches für die Kollision eines sich mit 7 km/h bewegenden Kraftfahrzeugs mit einem Gegenstand aus Holz simuliert wurde. In Fig. 2A ist die Leistungsverteilung über einen Frequenzbereich von 0 bis 10 kHz und über einen Zeitraum von 10 ms dargestellt. Fig. 2B zeigt das gleiche Simulationsergebnis, wobei die Leistung hier nicht über einzelne Frequenzen sondern über Frequenzanteile aufgetragen ist, welche Bändern aus der Fouriertransformation entsprechen.

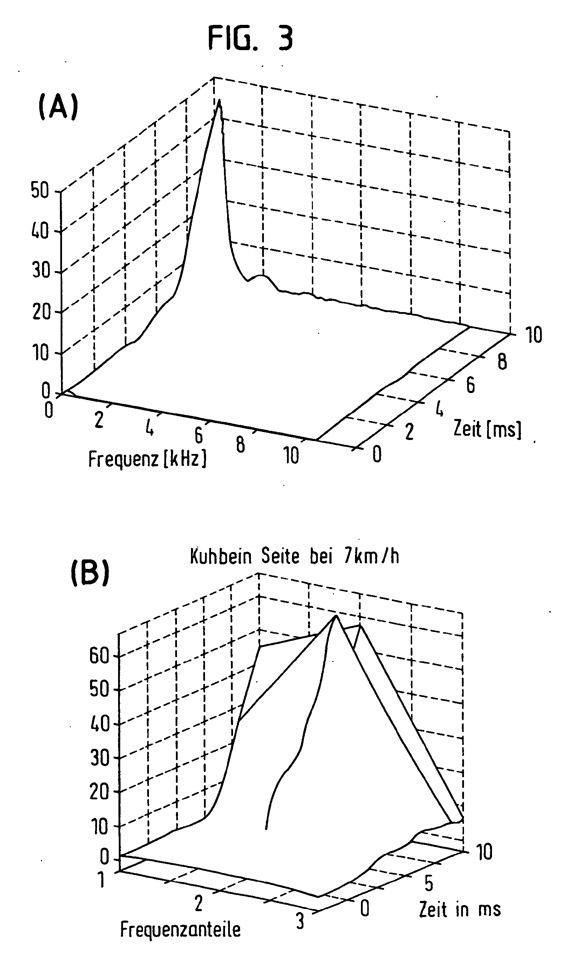

Fig. 3 zeigt die entsprechenden Ergebnisse einer Simulation, bei der ein sich mit 7 km/h bewegendes Kraftfahrzeug mit einem Bein einer Kuh kollidiert.

Wie sich aus dem Vergleich von Fig. 2 und Fig. 3 ergibt, erstreckt sich die Leistungsverteilung im Falle einer Kollision mit einem hölzernen Gegenstand über einen weiteren Frequenzbereich als bei einer Kollision mit einem Kuhbein. Darüber hinaus ist die maximale Amplitude bzw. Stärke der Leistung bei einer Kollision mit einem hölzernen Gegenstand um ein Vielfaches höher als bei einer Kollision mit einem Kuhbein.

Das Auto-Power-Spektrum einer Kollision mit einem Gegenstand aus Holz unterscheidet sich also deutlich von dem einer Kollision mit einem Kuhbein. Dagegen ist das nicht dargestellte Auto-Power-Spektrum einer Kollision mit einem Menschen dem einer Kollision mit einem Kuhbein sehr ähnlich.

Anhand ihrer Auto-Power-Spektren lassen sich mögliche Kollisionen also in verschiedene Klassen einteilen, wobei eine Klasse beispielsweise Kollisionen mit harten Gegenständen, eine zweite Klasse Kollisionen mit weichen Gegenständen und eine dritte Klasse Kollisionen mit Lebewesen oder Menschen umfassen kann.

Sobald die Auswertung der Auto-Power-Spektren der von den Beschleunigungssensoren 20 ausgegebenen Signale übereinstimmend ergibt, dass eine Kollision mit einem Menschen stattgefunden hat, gibt die Auswerteeinheit 22 ein entsprechendes Signal an die Rechnereinheit 24 aus, durch die geeignete Sicherheitsmaßnahmen zum Schutz der Person eingeleitet werden.

Liefern die Auswertungen der Signale der beiden Beschleunigungssensoren 20 unterschiedliche Ergebnisse, d.h. detektiert der eine Beschleunigungssensor 20 eine Kollision mit einer Person und der andere Beschleunigungssensor 20 eine Kollision mit einem harten Gegenstand, so werden die einzelnen ermittelten Amplituden und Stärken der Leistungen der Auto-Power-Spektren mit entsprechenden Schwellwerten verglichen, um eine endgültige Entscheidung über die Auslösung von Sicherheitsmaßnahmen zu treffen.

In Fig. 4 ist eine zweite Ausführungsform der erfindungsgemäßen Vorrichtung zur Kollisionsdetektion dargestellt. Bauteile, die denen der ersten Ausführungsform in Bauweise und/oder Funktion gleichen, sind mit den gleichen Bezugszeichen gekennzeichnet.

Gezeigt ist ein Stoßfänger 12 mit einem sich im Wesentlichen quer zur Fahrtrichtung 14 und im Wesentlichen über die gesamte Breite des Stoßfängers 12 erstreckenden Metallträger 26, an dessen in Fahrtrichtung 14 weisender Seite ein Schaumkörper 28 angebracht ist, der sich ebenfalls über im Wesentlichen die gesamte Breite des Stoßfängers 12 erstreckt. An seiner Außenseite ist der Stoßfänger 12 mit einer Deckschicht 30 ummantelt.

An der dem Schaumkörper 28 abgewandten Seite des Metallträgers 26 sind zwei Beschleunigungssensoren 20 an dem Metallträger 26 angebracht, die mit einem Abstand D quer zur Fahrtrichtung 14 gesehen zueinander beabstandet sind. Zwischen dem Schaumkörper 28 und der Deckschicht 30 ist ein Kontaktsensor 18 angeordnet, der sich über im Wesentlichen die gesamte Breite des Schaumkörpers 28 erstreckt. Der Kontaktsensor 18 und die Beschleunigungssensoren 20 sind mit einer Auswerteeinheit 22 verbunden, die ihrerseits an eine zentrale Rechnereinheit 24 des Kraftfahrzeugs angebunden ist.

Der Kontaktsensor 18 ist durch eine Folie gebildet, die ein elektrisch leitfähiges Material aufweist, in dem eine Vielzahl von Mikrorissen vorgegeben ist. Im Normalzustand der Folie, d.h. im glatten, nicht verbogenen Zustand, sind die Mikrorisse geschlossen, und die Folie weist einen vergleichsweise geringen elektrischen Widerstand von typischerweise wenigen KOhm auf.

Im Falle einer Kollision, d.h. wenn der Stoßfänger 12 auf ein Hindernis trifft, wird der Kontaktsensor 18 verbogen. Dies führt dazu, dass Mikrorisse der Folie geöffnet werden. Die Anzahl der geöffneten Mikrorisse hängt dabei von dem Radius der Biegung ab. Die Öffnung der Risse führt zu einer Erhöhung des elektrischen Widerstandes der Folie und somit des Kontaktsensors 18. Der elektrische Widerstand des Kontaktsensors 18 steigt mit zunehmendem Biegeradius kontinuierlich an. Je nach Verbiegung des Kontaktsensors 18 kann der elektrische Widerstand der Folie dabei Werte von über 100 KOhm annehmen. Der Effekt ist reversibel, d.h. die Leitfähigkeit der Folie nimmt ihren ursprünglichen Wert wieder an, wenn der Kontaktsensor 18 nach einer Kollision wieder geglättet wird.

Bereits aus dem zeitlichen Verlauf und aus der Stärke der Änderung des elektrischen Widerstandes des Kontaktsensors 18 kann auf die Art der Kollision zurückgeschlossen werden, d.h. festgestellt werden, ob es sich um eine Kollision mit einem Menschen handelt oder nicht.

Eine wesentlich genauere Einordnung der Kollision ermöglicht jedoch die Auswertung der von den Beschleunigungssensoren 20 ausgegebenen Signale. Die Beschleunigungssensoren 20 können entweder dauerhaft aktiv sein oder, wie bei der ersten Ausführungsform, erst im Falle einer Kollision aktiviert werden.

Im Unterschied zur ersten Ausführungsform werden die Signale der beiden Beschleunigungssensoren 20 hier nicht unabhängig voneinander betrachtet, sondern in Korrelation gebracht. Zunächst werden Fouriertransformationen der Beschleunigungssensorsignale durchgeführt und aus diesen die Auto-Power-Spektren der Signale bestimmt, welche unter Berücksichtigung der Fahrzeuggeschwindigkeit ausgewertet werden.

Zusätzlich wird das Kreuzleistungsspektrum der von den beiden Beschleunigungssensoren 20 ausgegebenen Signale bestimmt, um daraus unter Einbeziehung der Fahrzeuggeschwindigkeit die Zuverlässigkeit der Signale zu ermitteln, d.h. also letztlich die Wahrscheinlichkeit dafür, dass die Signale tatsächlich aus einer Kollision mit einem Hindernis resultieren.

Ferner wird aus dem Kreuzleistungsspektrum eine Phasenverschiebung bestimmt, welche einen Hinweis darauf gibt, an welcher Stelle des Stoßfängers 12 die Kollision mit dem Hindernis genau stattgefunden hat, um gegebenenfalls örtlich begrenzte Sicherheitsmaßnahmen einleiten zu können.

Durch die Korrelation der beiden Beschleunigungssensorsignale wird eine besonders genaue und zuverlässige Analyse der Kollision erreicht. Eine Kollision mit einer Person wird daher mit einer besonders hohen Wahrscheinlichkeit erkannt. Somit kann der Schutz der Person im Falle einer Kollision mit dem Kraftfahrzeug erheblich verbessert und gleichzeitig eine unnötige Auslösung von Personenschutzmaßnahmen wirksam vermieden werden.

### Bezugszeichenliste

- 10: Chassis
- 12: Stoßfänger
- 14: Fahrtrichtung
- 16: Trägerelement
- 18: Kontaktsensor
- 20: Beschleunigungssensor
- 22: Auswerteeinheit
- 24: Rechnereinheit
- 26: Metallträger
- 28: Schaumkörper
- 30: Deckschicht

## Patentansprüche

1. Vorrichtung zur Detektion einer Kollision eines Kraftfahrzeugs mit einer Person, umfassend einen im Bereich eines Stoßfängers (12) des Kraftfahrzeugs angeordneten Kontaktsensor (18) und wenigstens einen Beschleunigungssensor (20),
**dadurch gekennzeichnet, dass**
der Beschleunigungssensor (20) im Bereich des Stoßfängers (12) des Kraftfahrzeugs angeordnet ist,
eine mit den Sensoren (18, 20) verbundene Auswerteeinheit (22) Vorhanden ist, durch welche eine Spektralanalyse eines von dem Beschleunigungssensor (20) ausgegebenen Signals durchgeführt wird um ein Auto-Power-Spektrum des Signals zu erzeugen, wobei das Auto-Power-Spektrum im Falle unterschiedlicher Arten von Kollisionen unterschiedliche Charakteristiken aufweist und mögliche Kollisionen anhand ihrer Auto-Power-Spektren in verschiedene Klassen eingeteilt sind, wobei eine erste Klasse Kollisionen mit harten Gegenständen, eine zweite Klasse Kollisionen mit weichen Gegenständen und eine dritte Klasse Kollisionen mit Lebewesen oder Menschen umfasst, und
die Auswerteeinheit (22) ein Register aufweist, in welchem fahrzeuggeschwindigkeitsabhängige charakteristische Spektren abgelegt sind, mit denen das erzeugte Auto-Power-Spektrum zur Bestimmung der Klasse einer detektierten Kollision verglichen wird.

2. Vorrichtung nach Anspruch 1,
**dadurch gekennzeichnet, dass**
mindestens zwei Beschleunigungssensoren (20) vorgesehen sind.

3. Vorrichtung nach Anspruch 1 oder 2,
**dadurch gekennzeichnet, dass**
durch die Auswerteeinheit (22) das Kreuzleistungsspektrum der von zwei Beschleunigungssensoren (20) ausgegebenen Signale bestimmbar ist.

4. Vorrichtung nach Anspruch 3,
**dadurch gekennzeichnet, dass**
durch die Auswerteeinheit eine Phasenverschiebung des Kreuzleistungsspektrums der von den beiden Beschleunigungssensoren (20) ausgegebenen Signale bestimmbar ist.

5. Vorrichtung nach einem der vorherigen Ansprüche,
**dadurch gekennzeichnet, dass**
durch die Auswerteeinheit (22) die von zwei Beschleunigungssensoren (20) ausgegebenen Signale unabhängig voneinander auswertbar sind.

6. Vorrichtung nach einem der vorherigen Ansprüche,
**dadurch gekennzeichnet, dass**
der oder jeder Beschleunigungssensor (20) aktivierbar ist, wenn ein von dem Kontaktsensor (18) ausgegebenes Signal einen vorbestimmten Schwellwert überschreitet.

7. Vorrichtung nach einem der vorherigen Ansprüche,
**dadurch gekennzeichnet, dass**
der oder jeder Beschleunigungssensor (20) in Fahrtrichtung (14) gesehen hinter dem Kontaktsensor (18) angeordnet ist.

8. Vorrichtung nach einem der vorherigen Ansprüche,
**dadurch gekennzeichnet, dass**
zwei Beschleunigungssensoren (20) quer zur Fahrtrichtung (14) gesehen zueinander beabstandet sind.

9. Vorrichtung nach einem der vorherigen Ansprüche,
**dadurch gekennzeichnet, dass**
der Kontaktsensor (18) in einem in Fahrtrichtung (14) weisenden Oberflächenbereich des Stoßfängers (12) angeordnet ist.

10. Vorrichtung nach einem der vorherigen Ansprüche,
**dadurch gekennzeichnet, dass**
der Kontaktsensor (18) mehrere über die Breite des Stoßfängers (12) verteilt angeordnete Sensorabschnitte umfasst.

11. Vorrichtung nach einem der vorherigen Ansprüche,
**dadurch gekennzeichnet, dass**
der Kontaktsensor (18) eine Folie aufweist, deren elektrischer Widerstand sich beim Verbiegen der Folie reversibel ändert und/oder erhöht.

12. Vorrichtung nach Anspruch 11,
**dadurch gekennzeichnet, dass**
die Folie ein elektrisch leitfähiges Material mit vorgegebenen Mikrorissen aufweist, die beim Verbiegen der Folie aufgeweitet werden.

13. Vorrichtung nach einem der vorherigen Ansprüche,
**dadurch gekennzeichnet, dass**
die Spektralanalyse eine Fouriertransformation ist.

## Claims

1. Device for the detection of a collision of a motor vehicle with a person, including a contact sensor (18) arranged in the region of a bumper (12) of the motor vehicle, and at least one acceleration sensor (20), **characterised in that**
- the acceleration sensor (20) is arranged in the region of the bumper (12) of the motor vehicle,
- there is an evaluating unit (22) which is connected to the sensors (18, 20) and by which spectral analysis of a signal emitted by the acceleration sensor (20) is carried out in order to produce an auto power spectrum of the signal, the auto power spectrum having different characteristics in case of different types of collisions, and possible collisions being divided with reference to their auto power spectra into different categories, a first category including collisions with hard objects, a second category collisions with soft objects and a third category collisions with human or other living beings, and
- the evaluating unit (22) comprises a register in which are filed vehicle speed-dependent characteristic spectra with which the auto power spectrum produced is compared to determine the category of a collision detected.

2. Device according to claim 1, **characterised in that** at least two acceleration sensors (20) are provided.

3. Device according to claim 1 or 2, **characterised in that** the cross power spectrum of the signals emitted by two acceleration sensors (20) can be determined by the evaluating unit (22).

4. Device according to claim 3, **characterised in that** a phase displacement of the cross power spectrum of the signals emitted by the two acceleration sensors (20) can be determined by the evaluating unit.

5. Device according to any of the preceding claims, **characterised in that** the signals emitted by two acceleration sensors (20) can be evaluated independently of each other by the evaluating unit (22).

6. Device according to any of the preceding claims, **characterised in that** the or each acceleration sensor (20) can be activated when a signal emitted by the contact sensor (18) exceeds a predetermined threshold value.

7. Device according to any of the preceding claims, **characterised in that** the or each acceleration sensor (20) is arranged behind the contact sensor (18), seen in the direction of travel (14).

8. Device according to any of the preceding claims, **characterised in that** two acceleration sensors (20) are spaced apart from each other, seen transversely to the direction of travel (14).

9. Device according to any of the preceding claims, **characterised in that** the contact sensor (18) is arranged in a surface region of the bumper (12) facing in the direction of travel (14).

10. Device according to any of the preceding claims, **characterised in that** the contact sensor (18) includes several sensor sections distributed across the width of the bumper (12).

11. Device according to any of the preceding claims, **characterised in that** the contact sensor (18) has a film of which the electrical resistance reversibly changes and/or increases when the film is bent.

12. Device according to claim 11, **characterised in that** the film has an electrically conductive material with predetermined microcracks which are expanded when the film is bent.

13. Device according to any of the preceding claims, **characterised in that** the spectral analysis is a Fourier transform.

## Revendications

1. Dispositif pour la détection d'une collision d'un véhicule automobile avec une personne, comprenant un capteur de contact (18) agencé dans la région d'un pare-chocs (12) du véhicule automobile et au moins un capteur d'accélération (20),
**caractérisé en ce que**
le capteur d'accélération (20) est agencé dans la région du pare-chocs (12) du véhicule automobile,
il est prévu une unité d'évaluation (22) reliée au capteur (18, 20), au moyen de laquelle est exécutée une analyse spectrale d'un signal délivré par le capteur d'accélération (20) pour générer un spectre de puissance automatique du signal, et le spectre de puissance automatique présente, dans le cas de types de collisions différents, des caractéristiques différentes et les collisions possibles sont classées dans des classes différentes à l'aide de leur spectre de puissance automatique, de telle sorte qu'une première classe inclut les collisions avec des objets durs, une seconde classe inclut des collisions avec des objets mous et une troisième classe inclut des collisions avec des êtres vivants ou des hommes, et
l'unité d'évaluation (22) comprend un registre dans lequel sont mémorisés des spectres caractéristiques en dépendance de la vitesse du véhicule, avec lesquels le spectre de puissance automatique généré est comparé à une collision détectée pour déterminer la classe.

2. Dispositif selon la revendication 1,
**caractérisé en ce qu'**il est prévu au moins deux capteurs d'accélération (20).

3. Dispositif selon la revendication 1 ou 2,
**caractérisé en ce que** le spectre de puissance croisée des signaux fournis par les deux capteurs d'accélération (20) est susceptible d'être déterminé par l'unité d'évaluation (22).

4. Dispositif selon la revendication 3,
**caractérisé en ce qu'**un décalage de phase du spectre de puissance croisée des signaux fournis par les deux capteurs d'accélération (20) est susceptible d'être déterminé par l'unité d'évaluation (22).

5. Dispositif selon l'une des revendications précédentes,
**caractérisé en ce que** les signaux fournis par les deux capteurs d'accélération (20) sont susceptibles d'être évalués indépendamment les uns des autres par l'unité d'évaluation (22).

6. Dispositif selon l'une des revendications précédentes,
**caractérisé en ce que** le ou chaque capteur d'accélération (20) peut être activé quand un signal fourni par le capteur de contact (18) dépasse une valeur seuil prédéterminée.

7. Dispositif selon l'une des revendications précédentes,
**caractérisé en ce que** le ou chaque capteur d'accélération (20) est agencé derrière le capteur de contact (18), vus en direction de circulation (14).

8. Dispositif selon l'une des revendications précédentes,
**caractérisé en ce que** deux capteurs d'accélération (20) sont agencés à distance l'un de l'autre, vus transversalement à la direction de circulation (14).

9. Dispositif selon l'une des revendications précédentes,
**caractérisé en ce que** le capteur de contact (18) est agencé dans une région de surface du pare-chocs (12) tournée dans la direction de circulation (14).

10. Dispositif selon l'une des revendications précédentes,
**caractérisé en ce que** le capteur de contact (18) comprend plusieurs tronçons de capteurs agencés de façon répartie sur la largeur du pare-chocs (12).

11. Dispositif selon l'une des revendications précédentes,
**caractérisé en ce que** le capteur de contact (18) comprend un film dont la résistance électrique se modifie et/ou augmente de manière réversible lors du cintrage du film.

12. Dispositif selon la revendication 11,
**caractérisé en ce que** le film comprend un matériau électriquement conducteur avec des microfissures prédéterminées qui s'élargissent lors du cintrage du film.

13. Dispositif selon l'une des revendications précédentes,
**caractérisé en ce que** l'analyse spectrale est une transformation de Fourier.
